# EUROPEAN PATENT APPLICATION

(11) **EP 1 385 316 A1**
(43) Date of publication of application: **28.01.2004**
(21) Application number: 03253344.0
(22) Date of filing: 28.05.2003
(51) Int. Cl.: H04L 29/12, H04L 12/28, F25D 29/00

(54) **Internet-enabled refrigerator**

(30) Priority: 27.07.2002 KR 2002044483
(71) Applicant: SAMSUNG ELECTRONICS CO., LTD., Suwon-City, Kyungki-do (KR)
(72) Inventor: Song, Dong-june, Busan city (KR); Lee, Gi-hyeong, Kwangju City (KR)
(74) Representative: Geary, Stuart Lloyd

(57) **Abstract**

A method of remotely controlling an Internet refrigerator having its own proper ID, includes transmitting a variable IP information assigned to the Internet refrigerator where the Internet refrigerator accesses the Internet, and the proper ID, to a server from the Internet refrigerator; storing the proper ID and the IP address information pertaining to the Internet refrigerator in the server; supplying the IP address information of the Internet refrigerator as appropriate, according to the proper ID address inputted by a user who has access to the server through the Internet, to a user terminal; and allowing the user terminal to access the Internet refrigerator, based on the IP information received from the server. Thus, a user in a remote place can access the Internet refrigerator by a remote control through a terminal in the case of the refrigerator assigned a variable IP address.

## Description

The present invention relates to a method of providing a DNS service for accessing an network-enabled refrigerator, a DNS server for providing a DNS service for accessing a network-enabled refrigerator and a network-enabled refrigerator including processing means and network communication means, the processing means being configured to connect the refrigerator to a network and receive a dynamic IP address from an IP address allocating means

Recently, an Internet-enabled refrigerator has been developed. The Internet-enabled refrigerator can be monitored and controlled remotely across the Internet. Additionally, the upgrading of the refrigerator's software can be performed across the Internet.

To directly access the Internet-enable refrigerator from outside the home, the user has to know the IP address of the Internet-enabled refrigerator. However, Internet service providers typically do not allocate fixed IP addresses to domestic customers.

A method of providing a DNS service for accessing an network-enabled refrigerator, according to the present invention, comprises:
receiving an IP address notification from an Internet-enabled refrigerator;
the notification giving the sending refrigerator's current IP address and hostname;
creating or updating a mapping between said IP address and said hostname;
receiving a look up request containing said hostname;
responding to said request with said IP address onto said hostname.

Preferably, after receiving said request, it is determined whether said refrigerator is accessible and a response containing said IP address is only sent if it is determined that the refrigerator is accessible. More preferably, if the refrigerator is determined not to be accessible, and different IP address is sent in a response to said request.

A DNS server for providing a DNS service for accessing a network-enabled refrigerator, according to the present invention, comprises processing means and network communication means, wherein the processing means is configured for causing the server to perform a method according to the present invention.

A network-enabled refrigerator according to the present invention is characterised in that the processing means is configured such that, on connection, the allocated IP address is notified to a DNS server according to the present invention in an IP address notification.

An embodiment of the present invention will now be described, by way of example, with reference to the accompanying drawings, in which:
Figure 1 is a schematic diagram of the remote control system for an Internet refrigerator according to the present invention;
Figure 2 is a control block diagram of the Internet refrigerator of Figure 1;
Figure 3 is a signalling for the remote control system in Figure 1; and
Figure 4 is a flowchart illustrating a remote access process for the Internet-enabled refrigerator in Figure 1.

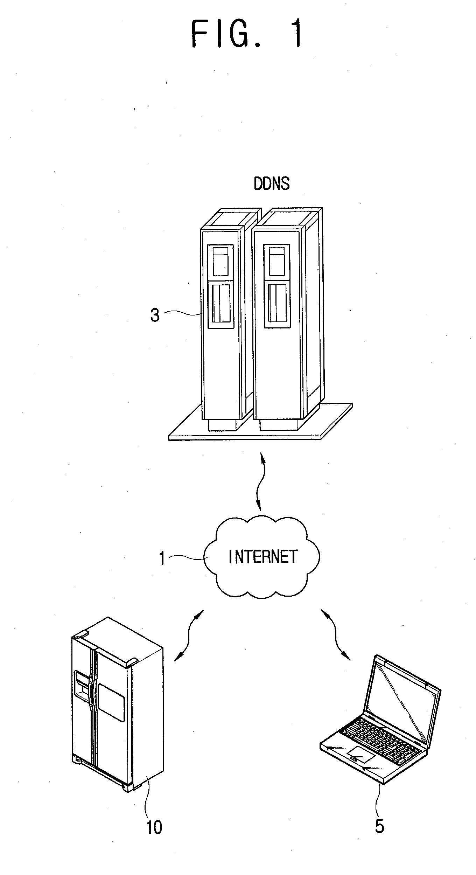

Referring to Figure 1, a remote control system for an Internet-enabled refrigerator according to the present invention is comprised of the Internet-enabled refrigerator 10 itself which has been assigned an IP address, a user terminal 5 through which a user can access the Internet-enabled refrigerator 10 and a DDNS (dynamic domain name server) 3.

The user terminal 5 has access to the Internet 1, enabling the user to access the Internet-enabled refrigerator 10 remotely through the Internet 1. Examples of the user terminal 5 are a computer, a PDA (personal digital assistant) and a mobile phone with access to the Internet. However, embodiments of the present invention are not limited to such examples, as the user terminal 5 may be any device that can access the Internet.

The DDNS 3 is a server enabling a dynamic IP address to be used like a fixed IP address by performing the function of determining the current IP address of a host whose hostname has been input by a user. The DDNS 3 checks whether the Internet-enabled refrigerator 10 has accessed the Internet and provides the user with the IP address currently assigned to the Internet-enabled refrigerator, after determining the IP address currently assigned to the Internet-enabled refrigerator 10 to which the user desires to access. Consequently, the user is enabled to directly access the Internet-enabled refrigerator 10, even though its IP address is changed from time to time, by being provided with the current IP address in response to the Internet-enabled refrigerator's hostname.

The Internet-enabled refrigerator 10 is accessible via the Internet 1 to thereby provide relevant data to the user terminal 5 and perform control functions as selected by the user. Internet-enabled refrigerators 10 employing the present system have their own hostnames and transmit to the DDNS 3 their respective changing IP addresses.

Accordingly, the user ascertains the IP address of the Internet-enabled refrigerator 10 through the DDNS 3 and is consequently able to access the Internet-enabled refrigerator 10 through the Internet.

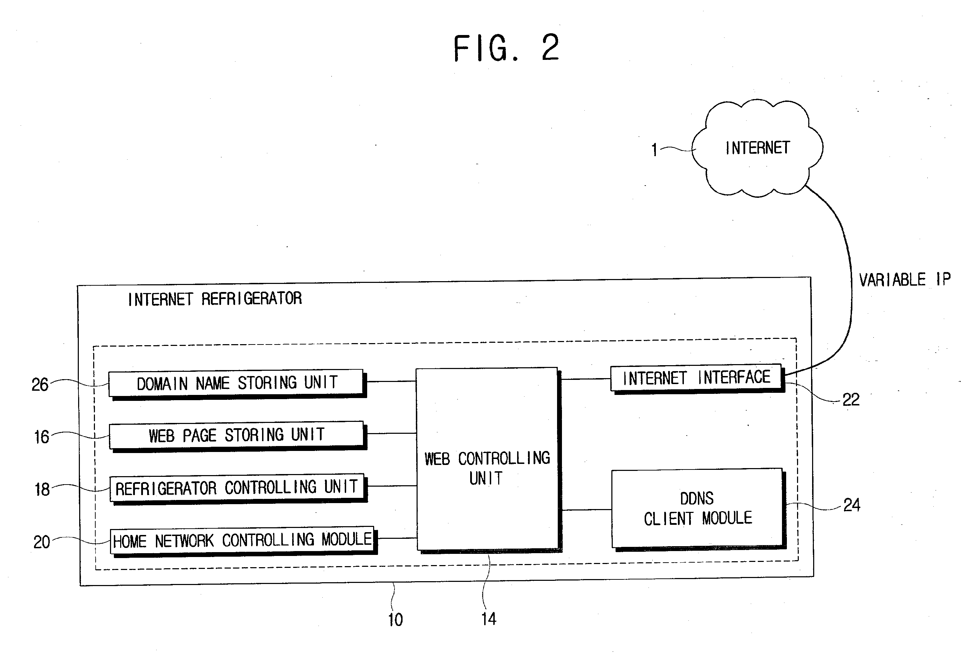

Referring to Figure 2, the Internet-enabled refrigerator 10 is comprises of an Internet interface 22 for enabling access to the Internet 1, a refrigerator control module 18 for performing conventional refrigerator control functions, a domain storing unit 26 storing therein the full hostname uniquely assigned to the refrigerator 10, a World Wide Web (web) page storing unit 16 storing therein web pages, a DDNS client module 24 for reporting the refrigerator's IP address to the DDNS 3 and a web control unit 14 controlling the Internet-related functions of the refrigerator 10.

The Internet interface 22 is an Internet-connecting unit, such as an xDSL (e.g. ADSL, HDSL, VDSL, etc.) modem, a cable modem etc., and a local area network (LAN) card or the like. The Internet interface 22 may provide access to the Internet wirelessly, for example, by employing for example a wireless LAN card, in addition to the wire access by the units as described above.

The web page storing unit 16 stores therein web pages for providing a user interface to the refrigerator 10 via the user terminal 6.

The refrigerator control module 18 controls the conventional refrigerator functions provided of the refrigerator 10, inclusive of, but not limited to, its cooling function. Furthermore, the refrigerator control module 18 provides data concerning the setup and the operation statuses of the functions of the refrigerator to the web control unit 14.

The web control unit 14 sends the data stored in the web page storing unit 16 and the information received from the refrigerator control module 18 in web pages in response to requests from the user terminal 5 via the Internet 1, so that the user can ascertain the status of the Internet-enabled refrigerator 10. The user may change the setup of the refrigerator depending on the status of the Internet-enabled refrigerator 10 as confirmed through the user terminal 5, and the web control unit 14 supplies the setup information, changed by the user, as received through the Internet interface 22 to the refrigerator controlling module 18, to thereby reflect the user's instructions for operation of the refrigerator.

The Internet-enabled refrigerator 10 of the present system further comprises a home network control module 20, thereby enabling domestic electronic devices to be controlled by the home network control module 20 of the Internet-enabled refrigerator 10. The home network control module 20 may supply status data for each electric device connected to the home network to the web controlling unit 14. The web control unit 14 send pages containing the status of the home network in response to requests from the user terminal 4 via the Internet 1, so as to enable the user to change or ascertain the setup of the home network.

The Internet-enabled refrigerator 10 transmits its current IP address, using the DDNS client module 24, to the DDNS 3. When the Internet-enabled refrigerator 10 is accessing the Internet 1, the DDNS client module 24 ascertains the refrigerator's. current IP address and transmits the current IP address and the domain information to the DDNS 3. This function of the DDNS client module 24 is automatically executed when the Internet-enabled refrigerator 10 is connected to the Internet 1. Where the assigned IP address is changed, DDNS client module 24 transmits the changed IP address to the DDNS 3, thereby allowing the DDNS 3 to update its mapping between the refrigerator's hostname and its IP address.

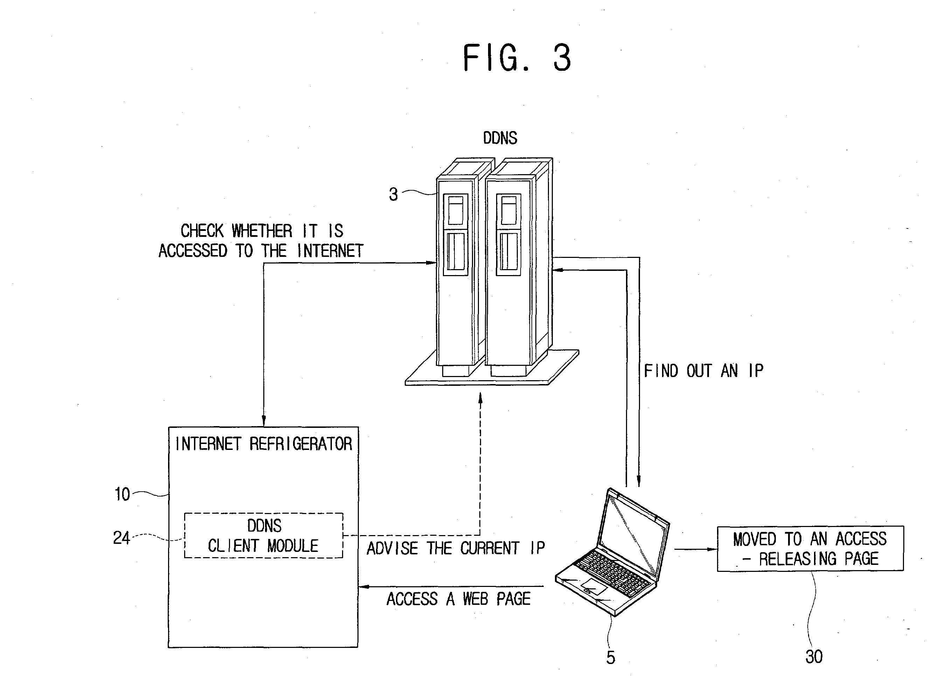

With this configuration, when the remote control system for the Internet-enabled refrigerator 10 is used, signals are transmitted as shown in Figure 3.

Referring to Figure 3, the DDNS client module 24 of the Internet-enabled refrigerator 10 transmits the refrigerator's current IP address to the DDNS 3. The DDNS 3 receives the current IP address from the DDNS client module 24 and is thereby informed of the IP address of the Internet-enabled refrigerator 10.

When a remote user wants to access the Internet-enabled refrigerator 10 through the Internet 1, the user inputs the hostname of the Internet-enabled refrigerator 10 into the user terminal 5. Then, the input hostname is transmitted to the DDNS 3, and the DDNS 3 ascertains the IP address of the Internet-enabled refrigerator 10 corresponding to the hostname input by the user.

When the user inquires about the IP address of the Internet-enabled refrigerator 10, the DDNS 3 first ascertains whether the Internet-enabled refrigerator 10 is connected to the Internet, and, if the Internet-enabled refrigerator 10 is connected to the Internet 1, it supplies the user with the refrigerator's current IP address. The user can then request web pages from the Internet-enabled refrigerator 10 through the Internet 1, according to the IP address information supplied by the DDNS 3.

If it is determined by the DDNS 3 that the Internet-enabled refrigerator 10 which the user desires access is not accessing the Internet 1, the DDNS 3 displays a page indicating to the user that the Internet-enabled refrigerator 10 is not connected to the Internet. The "not connected" web page may be provided by the DDNS 3 or the user may be directed to a "not connected" web page provided by the manufacturer of the Internet-enabled refrigerator 10 by being supplied the IP address of the server serving the manufacturers "not connected" web page.

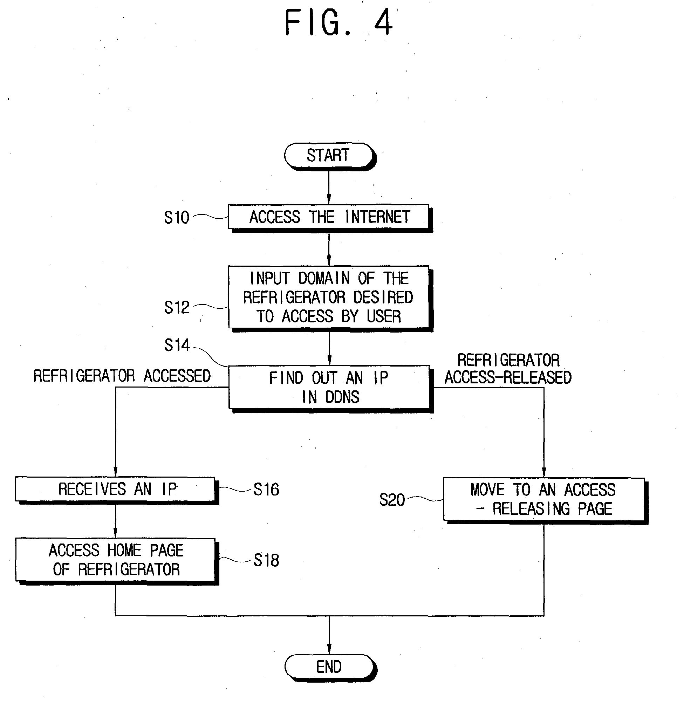

Referring to Figure 4, the user in a remote place accesses the Internet 1 by means of the terminal 5 (S10) and inputs the hostname of the Internet-enabled refrigerator 10 to which he/she desires to access (S12). When the input hostname is transmitted to the DDNS 3, the DDNS 3 finds out the IP address matching the input hostname (S14). The operation of finding out the IP address may be performed by allowing the user to insert the hostname of his/her own Internet-enabled refrigerator 10 into a web browser. In other words, when the user directly inputs the hostname of the Internet-enabled refrigerator 10 which he/she desires to access, in an address box of the web browser, the input hostname is transmitted to the DDNS 3 and the DDNS 3 determines the IP address appropriate for the input hostname.

When the Internet-enabled refrigerator 10 is connected to the Internet, the user can be supplied with the current IP address of the Internet-enabled refrigerator 10 from the DDNS 3 (S16), and can access the home page of the Internet-enabled refrigerator 10 using the supplied IP address (S18). The user may access the home page of the Internet-enabled refrigerator 10 merely by inserting the hostname of the Internet-enabled refrigerator 10, which he/she desires to access, into the web browser.

When the Internet-enabled refrigerator 10 is not connected to the Internet 1, the DDNS 3 causes the user terminal 5 to obtain the "not connected" page (S20). Accordingly, the user can recognize that the Internet-enabled refrigerator 10 is not connected to the Internet 1.

As described above, the system enables the user, who is desirous of remotely accessing an Internet-enabled refrigerator through the Internet, to receive the IP address therefor from a server and access the Internet-enabled refrigerator, by allowing the Internet-enabled refrigerator assigned a variable IP address to supply the currently assigned IP address to the server.

As described above, there is provided a remote control system of an Internet accessible refrigerator and a method of remote control of the refrigerator, wherein a user in a remote place can access the Internet-enabled refrigerator by a remote control through a terminal in the case of the refrigerator assigned a variable IP address.

The hardware included in the system may include memories, processors, and/or Application Specific Integrated Circuits ("ASICs"). Such memory may include a machine-readable medium on which is stored a set of instructions (i.e., software) embodying any one, or all, of the methodologies described herein. Software can reside, completely or at least partially, within this memory and/or within the processor and/or ASICs. For the purposes of this specification, the term "machine-readable medium" shall be taken to include any mechanism that provides (i.e., stores and/or transmits) information in a form readable by a machine (e.g., a computer). For example, a machine-readable medium includes read only memory ("ROM"), random access memory ("RAM"), magnetic disk storage media, optical storage media and flash memory devices, and electrical, optical, acoustical or other forms of signals (e.g., carrier waves, infrared signals, digital signals, etc.).

## Claims

1. A method of providing a DNS service for accessing an network-enabled refrigerator, the method comprising:
receiving an IP address notification from an Internet-enabled refrigerator (10);
the notification giving the sending refrigerator's current IP address and hostname;
creating or updating a mapping between said IP address and said hostname;
receiving a look up request containing said hostname;
responding to said request with said IP address onto said hostname.

2. A method according to claim 1, wherein, after receiving said request, it is determined whether said refrigerator (10) is accessible and a response containing said IP address is only sent if it is determined that the refrigerator (10) is accessible.

3. A method according to claim 2, wherein, if the refrigerator (10) is determined not to be accessible, and different IP address is sent in a response to said request.

4. A DNS server for providing a DNS service for accessing a network-enabled refrigerator (10), the server comprising processing means and network communication means, wherein the processing means is configured for causing the server to perform a method according to any preceding claim.

5. A network-enabled refrigerator including processing means (14, 24) and network communication means (22), the processing means (14, 24) being configured to connect the refrigerator to a network (1) and receive a dynamic IP address from an IP address allocating means, **characterised in that** the processing means (14, 24) is configured such that, on connection, the allocated IP address is notified to a DNS server (3) according to claim 4 in an IP address notification.

6. A method of remotely controlling an Internet refrigerator having an own proper ID, comprising:
transmitting a variable internet protocol (IP) address information assigned to the Internet refrigerator where the Internet refrigerator accesses the Internet, and the proper ID, to a server from the Internet refrigerator;
storing in the server the proper ID and the IP address information pertaining to the Internet refrigerator;
supplying the IP address information of the Internet refrigerator as appropriate, according to the proper ID address inputted by a user who has access to the server through the Internet, to a user terminal; and
allowing the user terminal to access the Internet refrigerator, based on the IP information received from the server.

7. The method according to claim 6, wherein the proper ID comprises a domain name assigned to the Internet refrigerator.

8. The method according to claim 6, wherein the server comprises a dynamic domain name server (DDNS).

9. The method according to claim 6, wherein the supplying the IP information to the user terminal comprises:
determining whether the Internet refrigerator is accessing the Internet; and
supplying the IP address information to the user terminal where the Internet refrigerator is in access.

10. The method according to claim 9, further comprising:
displaying a web page indicating that the access of the Internet refrigerator is released on the user terminal, where the Internet refrigerator is released from the access.

11. A system for remotely controlling an Internet refrigerator having an Internet interface for an access to the Internet, a proper ID storing unit storing therein a proper ID of the refrigerator, a web page storing unit storing therein a web page, and a web controlling unit displaying the web page on a user terminal accessed through the Internet, comprising:
an IP address transmitting unit provided in the Internet refrigerator, transmitting an IP address information variably assigned at a time of accessing the Internet through the Internet interface and the proper ID; and
a server including a domain storing unit storing therein a proper domain assigned to the Internet refrigerator, a domain controlling module matching the IP address information received from the IP address transmitting unit with the proper domain, and a server controlling unit supplying the user terminal with a current IP address information appropriate for the proper domain of the Internet refrigerator, according to the proper domain inputted using the user terminal.

12. The system according to claim 11, wherein the proper ID comprises a domain name assigned to the Internet refrigerator.

13. The system according to claim 11, wherein the server comprises a dynamic domain name server (DDNS).

14. The system according to claim 11, wherein the server controlling unit determines a status that the Internet refrigerator is accessing the Internet, according to the proper domain inputted through the user terminal, and supplies the current IP address information that is appropriate for the proper domain to the user terminal where the Internet refrigerator is accessing the Internet.

15. The system according to claim 14, wherein the server controlling unit indicates a web page informing an access-release of the Internet refrigerator on the user terminal, in response to the determination that the Internet refrigerator is released from accessing the Internet.

16. A system for remotely controlling a refrigerator that is connected to the Internet, comprising:
a refrigerator that is connected to the Internet;
a user terminal to remotely access and control the refrigerator via the Internet; and
a dynamic domain name server to manage a dynamic internet protocol (IP) address of the refrigerator and to provide the dynamic IP address to the user terminal.

17. The system of claim 16, wherein the user terminal is a computer, a personal digital assistant (PDA), or a mobile phone.

18. The system of claim 16, wherein the refrigerator comprises:
an Internet interface to enable the refrigerator to access the Internet;
a refrigerator control module to perform general functions of the refrigerator;
a domain storing unit to store a proper domain assigned to the refrigerator;
a web page storing unit to store World Wide Web (web) pages;
a dynamic domain name server client module to transfer the dynamic IP address to the dynamic domain name server; and
a web control unit to control the Internet interface, the refrigerator control module, the domain storing unit, the web page storing unit, and the dynamic domain name server client module.

19. The system of claim 18, wherein the Internet interface comprises means for wireless connection to the Internet.

20. The system of claim 18, wherein the Internet interface comprises means for wired connection to the Internet.

21. The system of claim 18, wherein the web page storing unit stores web pages that are inherently in the user terminal.

22. The system of claim 18, wherein the refrigerator control module transmits data regarding the setup and operation of the refrigerator to the user terminal via the Internet to enable a user to control the refrigerator.

23. The system of claim 22, wherein the web control unit causes the user terminal to display the data stored in the web page storing unit and the data transmitted from the refrigerator control module.

24. The system of claim 18, further comprising:
a home network control module, which is connected to a local network, to control a plurality of other appliances connected to the local network.

25. The system of claim 16, wherein the user terminal transmits a domain, which includes the refrigerator, to the dynamic domain name server.

26. A method of remotely controlling a refrigerator that is connected to the Internet, comprising:
receiving a domain of a refrigerator from a user terminal via the Internet;
determining whether the refrigerator is connected to the Internet; and
transmitting a dynamic IP address of the refrigerator to the user terminal via the Internet if the refrigerator is connected to the Internet.

27. A machine-readable medium that provides instructions, which, when executed by a machine, cause the machine to perform operations for remotely controlling a refrigerator that is connected to the Internet, comprising:
receiving a domain of a refrigerator from a user terminal via the Internet;
determining whether the refrigerator is connected to the Internet; and
transmitting a dynamic IP address of the refrigerator to the user terminal via the Internet if the refrigerator is connected to the Internet.
